(19) Europäisches Patentamt / European Patent Office / Office européen des brevets

(11) **EP 4 414 664 A1**

(12) **EUROPEAN PATENT APPLICATION**

(43) Date of publication:
**14.08.2024   Bulletin 2024/33**

(21) Application number: **23275019.0**

(22) Date of filing: **09.02.2023**

(51) International Patent Classification (IPC):
*G01D 5/244* (2006.01)

(52) Cooperative Patent Classification (CPC):
**G01D 5/24485**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Renishaw PLC**
**Wotton-under-Edge, Gloucestershire GL12 8JR (GB)**

(72) Inventor: **The designation of the inventor has not yet been filed**

(74) Representative: **Rolfe, Edward William et al**
**Patent Department**
**Renishaw plc**
**New Mills**
**Wotton-under-Edge**
**Gloucestershire GL12 8JR (GB)**

(54) **ROTARY ENCODER APPARATUS**

(57)    A rotary encoder apparatus comprising: i) a scale member on which is provided at least one curved scale track that is centred on and extends at least partially annularly around a scale-track axis, the at least one curved scale track comprising substantially radially-extending scale features; and ii) a scale reading apparatus configured to obtain readings of the substantially radially-extending scale features, at first and second radially-offset locations. In use the scale reading apparatus and the scale member are configured to rotate relative to each other about an axis of rotation which is substantially parallel to the scale-track axis. The rotary encoder apparatus is configured to use the readings of the scale's radially-extending scale features obtained at both the first and second radially-offset locations to determine, at least one of: a) information about the arrangement of the scale reading apparatus and/or the scale member other than, or in addition to, information about their relative rotational arrangement about the axis of rotation; and b) a compensated measurement of the relative position of the scale reading apparatus and the disc scale member about the axis of rotation, wherein said compensated measurement is compensated for position errors about said axis of rotation caused by a change in the relative arrangement of said scale reading apparatus and the scale member other than, or in addition to, a change in their relative rotational arrangement about the axis of rotation.

Figure 3a

EP 4 414 664 A1

**Description**

The present invention relates to a rotary encoder apparatus and also a method of operating a rotary encoder apparatus.

Metrological scales are used in the position measurement of parts of a machine which can move relative to each other. A metrological scale typically has a series of features on it which can be read by a readhead so that the readhead can provide a measure of its position along, or around, the scale. The metrological scale can be mounted onto one part of a machine and is read by a suitable readhead which is attached to the other part of the machine. Known types of metrological scale include magnetic scales (in which the scale features are provided by features having particular magnetic properties), capacitive scales (in which the scale features are provided by features having particular capacitive properties), inductive scales (in which the scale features are provided by features having particular inductive properties) and optical scales (in which the scale features are provided by features having particular optical properties). Optical scales can be transmissive or reflective. Examples of optical scales are disclosed in EP0207121, US4974962, US7499827 and US7659992.

A so-called "incremental" position encoder can work, for example, by "counting" its position along the length of the scale, e.g. from its start-up position and/or from a defined reference marker(s) on the scale. Typically, the scale of an incremental position encoder will comprise at least one scale track comprising a series of periodic features. As will be understood, the way in which the "counting" of the readhead's position is done can vary from encoder apparatus to encoder apparatus. For example, one way is to generate a resultant field (such as a fringe field, modulated spots, image) at a detector in the readhead, which changes with relative movement. For example, light from a source within the readhead can hit the scale which diffracts the light into a number of diffraction orders. The diffraction orders interfere/interact/recombine at the detector to produce the resultant field. Optionally, an optical element within the readhead can be provided which redirects/deflects diffraction orders such that they interfere/interact at the detector so as to produce the resultant field. As the scale and readhead move relative to each other, the resultant field changes. The readhead can record and/or report movement and position by monitoring the change of the resultant field (e.g. movement of the fringe field). Such a position encoder is described in US5861953.

As will be understood, reference marks can be provided, for instance next to and/or embedded within the scale's periodic/incremental features, in order to provide defined reference positions. Such a position encoder is described in US7659992.

So-called "absolute" position encoders are also known which enable the absolute position of the readhead relative to a scale to be determined without the need to count from a predetermined position, such as a reference mark or an end position of the scale. Absolute position encoders typically comprise a scale with unique position data formed on it along the measuring length of the scale. The data can be in the form of, for instance, a pseudorandom sequence or discrete codewords. By reading this data as the scale reader passes over the scale, the scale reader can determine its absolute position. Examples of absolute position encoders are described in US7499827, US10132657 and US2012/0072169. It is known to use incremental scales alongside absolute scales. It is also known (and for example described in US7499827) that the absolute scale retains sufficient periodicity such that the scale can be used as a periodic incremental scale. Either way, such incremental scale can be used, for example, to fine-tune the determined absolute position. Optionally, such a system can be used such that after start-up and the absolute position has been determined, the relative position of the readhead and scale is subsequently measured by "counting" the change in position using the incremental scale. Such an incremental scale can be read in the same way as mentioned above, e.g. by analysing a resultant field produced (at a sensor in the readhead) by the diffraction orders created by the scale.

Rotary encoders for measuring rotary displacement are known. Typically, a rotary encoder comprises a readhead, and a scale member in the form of a disc or a ring. A scale member typically comprises at least one scale track comprising a series of scale features, the scale track extending annularly around a scale track axis. In use, the scale member and readhead are relatively rotatable about an axis of rotation that is substantially parallel to the scale track axis (i.e. to within 5°, more preferably to within 2.5°, especially preferably to within 1°). The readhead is arranged relative to the scale member such that it senses those scale features that lie within its reading footprint, from which it generates signals indicative of the relative rotational position of it and the scale member about the axis of rotation. Accordingly, as will be understood, the portion of scale features which fall within the readhead's reading footprint changes as the readhead and scale member rotate relative to each other.

Typically, a ring scale member has axially-extending scale features on an outer cylindrical circumferential surface of the annular body, whereas a disc scale member comprises a series of substantially radially-extending scale features defining a scale track that is centred on and extends around a scale track axis. The present invention concerns rotary encoders comprising scale members having a curved scale track that is centred on and extends at least partially annularly around a scale-track axis (that is coincident with the curved scale's centre of curvature), where the curved scale track has radially-extending scale features (e.g. extending radially from the scale-track axis/centre of curvature.

Generally, it is desirable to mount a scale member having a curved scale track (such a disc scale member which can also, interchangeably, be referred so as a scale disc member) such that the scale track axis (about which the curved scale track is centred on, and around which the curved scale track at least partially annularly extends) is substantially coaxial with the axis of rotation about which the scale member and readhead rotate. This is because any such offset between the scale track axis and axis of rotation (often referred to in the field of rotary encoders as "eccentricity") can lead to errors in the signal(s) provided by the readhead reading the scale as the scale member rotates. Furthermore, it can be helpful to know and/or adjust other aspects of the relative arrangement of the disc scale member and the readhead, such as their relative translational position, and/or the angular orientation of the readhead (e.g. its yaw configuration) in order to ensure the desired level of metrological performance during operation.

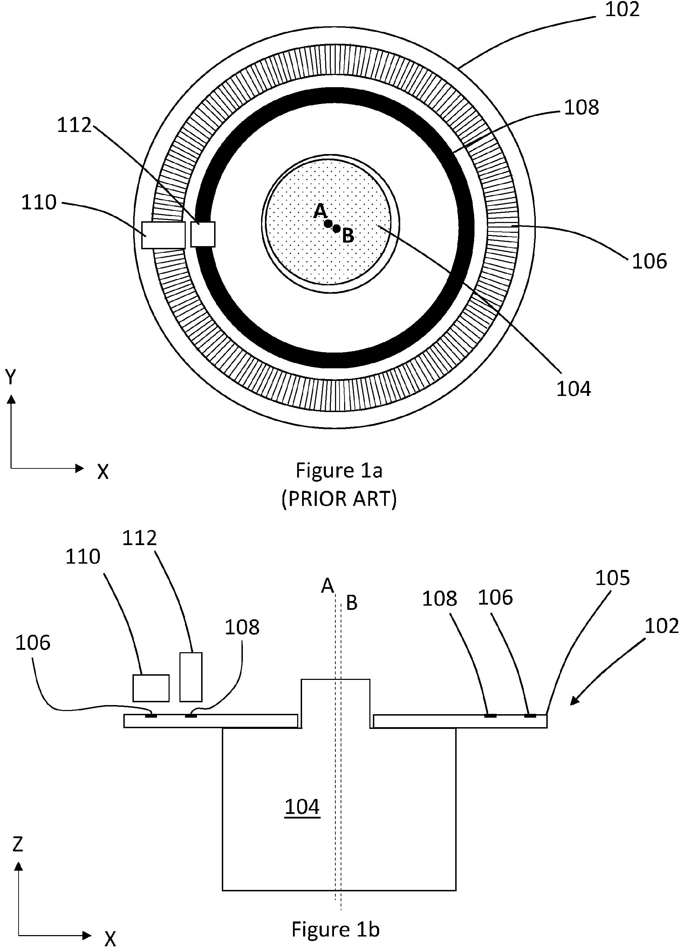

It is therefore known to perform a process of adjusting the (e.g. relative) arrangement of the scale member and/or readhead during the installation of a rotary encoder apparatus. For instance, it is known to adjust the radial position of the scale member so as to align the scale track axis and axis of rotation as best as possible. The act of adjusting the radial position typically involves the use of at least one sensor for providing a measurement which can help to determine the offset between the scale track axis and axis of rotation. For example, with reference to Figures 1a and 1b, there is shown a disc scale member 102 mounted on a shaft 104. The shaft 104 has an axis of rotation A. The disc scale member 102 comprises a series of scale features 106 which define a scale track that is centred on and extends around a scale axis B. The scale features 106 are formed on a planar surface 105 of the disc scale member 102, and as shown, the scale axis B extends normal to the planar surface 105. Note that the scale axis B may, or may not, be coincident with the geometric centre the disc scale member 102/planar surface 105. During use, a readhead 110 can be positioned so as to read the scale features 106 so as to determine and report to an external device relative motion between the disc scale 102 and the readhead.

The disc scale member 102 also comprises on its planar surface 105 an alignment band 108 which is formed concentrically with respect to the scale (i.e. the alignment band 108 is also centred on and extends around the scale axis B). The offset between the axis of rotation A and the scale axis B (which is also referred to herein as the "axis offset") can be determined by a sensor 112, for example an optical sensor, which monitors the radial position of the alignment band as the disc scale member 102 and the shaft 104 rotate. An offset between the axis of rotation A and the scale axis B will cause the alignment band to move radially back and forth with rotation. An operator can then use the output of the sensor 112 to determine how to adjust the radial position of the disc scale member 102 relative to the shaft 104 so as to reduce the offset. When the operator is happy that the axis offset is sufficiently small then the operator can fix the radial position of the disc scale member 102 relative to the shaft 104, e.g. via bolts, clamps and/or adhesive. In alternative known solutions, rather than providing and monitoring the radial position of an alignment band, a sensor (e.g. 112) can look at the edge of the scale lines to monitor their radial position as the disc scale rotates, from which the offset between the axes A and B can be determined. A further alternative solution is to determine the offset between the axes A and B via measurement of an axially-extending surface of the disc, e.g. via dial test indicator (DTI), as described in WO2022/171995.

Alternatively, it is known to compensate for the offset between the scale axis and axis of rotation by using two or more readheads which are positioned so as to sense the scale track at different positions about the scale track axis, examples of which are described in US8017904 and US9140580.

The present invention relates to an improved rotary encoder apparatus and method for operating a rotary encoder apparatus.

According to a first aspect of the invention there is provided a rotary encoder apparatus comprising: i) a scale member on which is provided at least one curved scale track that is centred on and extends at least partially annularly around a scale-track axis, the at least one scale track comprising substantially radially-extending scale features; and ii) a scale reading apparatus configured to obtain readings of the scale's substantially radially-extending scale features, at first and second radially-offset locations (which could be referred to as "radially-offset readings"); in which in use the scale reading apparatus and the scale member are configured to rotate relative to each other about an axis of rotation which is substantially parallel to the scale-track axis, and wherein the rotary encoder apparatus is configured to use the readings of the scale's radially-extending scale features obtained at both the first and second radially-offset locations to determine, at least one of: a) information about/indicative of (e.g. a measure of, for instance one or more values indicative of) the (e.g. relative) arrangement (for instance the translational and/or rotational arrangement) of the scale reading apparatus and/or the scale member other than, or in addition to, (in other words: "instead of or as well as") information about their relative rotational arrangement about the axis of rotation; and b) a compensated measurement of the relative rotational position of the scale reading apparatus and the scale member about the axis of rotation, wherein said compensated measurement is compensated for position errors about said axis of rotation caused by a change in the relative arrangement of said scale reading apparatus and the scale member other than, or in addition to, (in other words: "instead of or as well as") a change in their relative rotational arrangement about the axis of rotation.

As will be understood, the scale member and the scale reading apparatus can, in use, be configured to rotate relative to each other about an axis of rotation. E.g. they can be mounted on respective first and second parts of a machine which are configured to rotate relative to each other about an axis of rotation. As described in more detail below, it is possible to determine said information about the (e.g. relative) arrangement of said scale reading apparatus and/or the scale member (i.e. in "a)") and/or to determine said a compensated measurement of the relative position of the scale reading apparatus and the scale member (i.e. in "b)"), from (radially-offset) readings obtained at just one relative rotational angular orientation/configuration of the scale member and scale reading apparatus about the axis of rotation. However, in some circumstances, it might be beneficial to obtain such (radially-offset) readings at a plurality of different relative angular orientations of the scale member and scale reading apparatus about the axis of rotation. Accordingly, the scale reading apparatus can be configured to obtain, for a plurality of different relative angular orientations of the scale reading apparatus and scale member about the axis of rotation (about which they are configured to relatively rotate when in use and which is substantially parallel to the scale track axis), readings of the scale's substantially radially-extending scale features at first and second radially-offset locations.

The rotary encoder apparatus (in particular, for example, the scale reading apparatus) could be configured (e.g. set up) such that the readings obtained at the first and second radially-offset locations are obtained at substantially the same angular position about the scale-track axis. This can be beneficial as it avoids having to set up sensors at different angular positions about the scale-track axis (e.g. as is the case in the prior art techniques of US8017904 and US9140580). It can also help to improve the accuracy and/or ease of calculation of the information determine a) and/or the compensated measurement determined in b). For instance, the rotary encoder apparatus (in particular, for example, the scale reading apparatus) could be configured such that the angle about the scale-track axis between which the readings are obtained at the first and second radially-offset locations is not more than 5°, preferably not more than 2.5°, more preferably not more than 1°.

With reference to the example embodiments described in more detail below, if the readings at the first and second radially-offset locations are obtained by one and the same sensor, then the readings obtained at the first and second radially-offset locations will inherently be obtained at substantially the same angular position about the scale-track axis. If the readings at the first and second radially-offset locations are obtained by different (e.g. first and second) sensors, then the first and second sensors will need to be placed at sufficiently similar positions around the scale track axis such that the readings they obtain will be at substantially the same angular position about the scale-track axis. In such a case, the different (e.g. first and second) sensors could be arranged relative to each other such that: i) their measurement directions extend parallel to each other; ii) they are laterally offset relative to each other in a direction perpendicular to their measurement direction; and iii) they are positioned along their measurement directions relative to each other such that the point on one of the sensors (e.g. the first sensor) at which its position reading is calculated with respect to (e.g. its centre position) and the point on the other sensor (e.g. the second sensor) at which its position reading is calculated with respect to (e.g. its centre position), both lie on the same line, said line extending perpendicular to the measurement direction of the different (e.g. first and second) sensors. If the different (e.g. first and second) sensors are provided in one and the same sensor unit (e.g. one and the same readhead), then the sensor unit (e.g. readhead) could be configured such that: i) the measurement directions of the different (e.g. first and second) sensors extend parallel to each other; ii) the different (e.g. first and second) sensors are laterally offset relative to each other in a direction perpendicular to their measurement direction; and iii) the different (e.g. first and second) sensors are positioned along their measurement directions relative to each other such that the point on one of the sensors (e.g. the first sensor) at which its position reading is calculated with respect to (e.g. its centre position) and the point on the other sensor (e.g. the second sensor) at which its position reading is calculated with respect to (e.g. its centre position), both lie on the same line, said line extending perpendicular to the measurement direction of the different (e.g. first and second) sensors. Accordingly, a preferred embodiment can be that in which there is provided a single readhead (a "single readhead unit") which is configured with one or more sensors (e.g. as described above) for obtaining, at said first and second radially-offset locations, said readings of the scale's substantially radially-extending scale features. Such a readhead configuration can aid the installation of the rotary encoder apparatus and help with arranging the sensors such that the readings obtained at the first and second radially-offset locations are obtained at substantially the same angular position about the scale-track axis.

It can be preferred that the rotary encoder apparatus (in particular, the scale reading apparatus) is configured to obtain, at first and second radially-offset locations, readings of the scale's substantially radially-extending scale features within a sufficiently small time frame such that the change in angular position of the scale reading apparatus and the scale member, about the axis of rotation, between obtaining said readings, is not more than 5°, more preferably not more than 2.5°, especially preferably not more than 1°. Doing so can make the information determined in a) and/or the compensated measurement determined in b) more accurate and/or can make the calculations involved in a) and/or b) less complicated (e.g. can minimise/avoid the calculation of estimated readings; can minimise/avoid the extrapolation/interpolation of readings).

For simplicity and/or to help ensure the accuracy of what is determined in a) and/or b), it can be preferred that the rotary encoder apparatus (in particular, the scale reading apparatus) is configured to obtain substantially simultaneous readings of the scale's substantially radially-extending scale features at first and second radially-offset locations (i.e. regardless of the relative angular velocity of the scale reading apparatus and the scale member). For the sake of this document, substantially simultaneous readings means that the readings are obtained within not more than 100μs of each other.

The information that is determined in a) (i.e. said information that is determined about the arrangement of the scale reading apparatus and/or the scale member other than, or in addition to, information about their relative rotational arrangement about the axis of rotation) can comprise information about the relative arrangement of the scale reading apparatus and/or the scale member (other than, or in addition to, information about their relative rotational arrangement about the axis of rotation).

The information that is determined in a) can comprise information about the arrangement of the scale reading apparatus and/or the scale member in a plane perpendicular to the scale-track axis. Accordingly, the information that is determined in a) can comprise information about the relative arrangement of the scale reading apparatus and the scale member in a plane perpendicular to the scale-track axis.

The at least one scale track can be provided on a planar surface. Accordingly, said plane that is perpendicular to the scale-track axis/axis of rotation can be a plane that is parallel to the planar surface. If there is more than one scale track, they could be provided on different planar surfaces, which may or may not be coplanar (but are preferably substantially parallel to each other), but it can be preferred that they are provided on planar surfaces that are co-planar (e.g. they could be provided on the same planar surface).

The information that is determined in a) could comprise information about the yaw configuration of the scale reading apparatus relative to the scale member. In other words, said information could comprise information about the extent to which the scale reading apparatus is yawed relative to the radially-extending scale features. Yaw can be a measure of the angular orientation of the scale reading apparatus (e.g. readhead) about an axis that is parallel to the scale track axis.

The information that is determined in a) could comprise information about the angle, about the scale-track axis, between which the readings obtained at first and second radially-offset locations, were obtained. The information could comprise information about the deviation of the angle, about the scale-track axis, between which the readings obtained at first and second radially-offset locations, were obtained, from a desired/expected angle. The information could comprise information about a change in such an angle, e.g. over time and/or for a plurality of different relative angular orientations of the scale reading apparatus and the scale member about an axis of rotation (about which the scale member and scale reading apparatus relatively rotate when in use).

The rotary encoder apparatus could be configured to determine in a) information about (e.g. a measure of) the translational position of the scale reading apparatus and/or the scale member; for instance information about (e.g. a measure of) the relative translational position of the scale reading apparatus and the scale member.

The rotary encoder apparatus could be configured to determine in a) information about (e.g. a measure of) the offset between the scale track axis and the axis of rotation (about which the scale member and scale reading apparatus relatively rotate when in use) (which could be referred to as the "axis offset"). Such an axis offset can cause a change in the relative translational position of the scale reading apparatus and scale member in a plane perpendicular to the scale-track axis, as the scale member and scale reading apparatus rotate relative to each other about the axis of rotation. Such an axis offset can cause an error in the reading of the relative position of the scale reading apparatus and scale member (e.g. about the axis of rotation, for example, an error in the determination of the relative angular orientation of the scale reading apparatus and scale member about the axis of rotation). Accordingly, the apparatus could be configured to determine (e.g. in "a)") a measure of/information about the offset between the axis of rotation and the scale track axis. This information could be determined from (radially-offset) readings of the scale's substantially radially-extending scale features (i.e. at said first and second radially-offset locations) obtained at a plurality of different relative angular orientations of the scale reading apparatus and the scale member about the axis of rotation. This information could be determined, for example, from the aforementioned information about the translational position of the scale reading apparatus and/or the scale member; for instance from information about the relative translational position of the scale reading apparatus and the scale member (e.g. for a plurality of different relative angular orientations of the scale reading apparatus and the scale member about the axis of rotation). Such (radially-offset) readings obtained at a plurality of different relative angular orientations of the scale reading apparatus and the scale member about the axis of rotation, can be used to determine an axis offset error map and/or function. Accordingly, the information that is determined in a) (e.g. the measure of the offset between the axis of rotation and the scale track axis) can comprise an axis offset error map and/or function which can be used to compensate scale readings for errors caused by the axis offset.

The information that is determined in a) could be a measure, e.g. one or more values, that is derived from the readings obtained at both the first and second radially-offset locations. Accordingly, such a measure, or one or more values, can be indicative of the arrangement of the scale reading apparatus and/or the scale member other than, or in addition to, information about their relative rotational arrangement about the axis of rotation. For instance, a function may be used to derive such a measure/one or more values from readings obtained at both the first and second radially-offset locations. As will be understood, such a function can be configured such that the value(s) derived therefrom is/are dependent on at least one aspect of the relative arrangement of said scale reading apparatus and the scale member, other than their relative rotational arrangement about the axis of rotation. Accordingly, in other words, the measure/value(s) can be used to infer/derive/determine information about the arrangement of the scale reading apparatus and/or the scale member other than, or in addition to, information about their relative rotational arrangement about the axis of rotation.

The information determined in a) could be based on a difference between the readings of the scale's radially-extending scale features obtained at the first and second radially offset locations.

Optionally, the information determined in "a)" (e.g. the information about the axis offset) is determined from readings obtained over multiple relative revolutions (e.g. in the case of a scale member/scale reading apparatus that can relatively rotate infinitely around the axis of rotation) or oscillations (e.g. in the case of a scale member/scale reading apparatus that cannot rotate by more than 360°) of the scale member and scale reading apparatus (e.g. such that said information is an averaged calculation of said information, e.g., an averaged calculate of the axis offset).

The information determined in a) could be output, e.g. to a device separate to the scale reading apparatus, and optionally separate to the encoder apparatus as a whole. The information determined in a) could be recorded and/or monitored, e.g. to assess how it varies over time. The information determined in a) could be used, e.g. by the rotary encoder apparatus (e.g. the scale reading apparatus and/or a device separate to the scale reading apparatus/encoder apparatus). Similarly, the compensated measurement determined in b) could be output, recorded, monitored and/or used (to/by: the rotary encoder apparatus, e.g. the scale reading apparatus; and/or a device separate to the scale reading apparatus/encoder apparatus). Optionally uncompensated measurements determined from readings obtained and the first and/or second radially offset readings could be output, recorded, monitored and/or used instead of or as well as the information determined in a) and/or the compensated measurement determined in b).

The rotary encoder apparatus could be configured to use the information determined in a) to correct the current and/or subsequent readings of the relative position of the scale member and the scale reading apparatus. Accordingly, the information determined in a) could be referred to as a compensation value.

For instance, the rotary encoder apparatus could be configured to use any of the above described information determined in a) (e.g. the aforementioned: information about the yaw configuration; information about the angle, about the scale-track axis, between which the readings obtained at first and second radially-offset locations, were obtained; the offset between the scale track axis and the axis of rotation; and/or the axis offset error map and/or function) to correct the current and/or subsequent readings of the relative position of the scale member and a scale reading apparatus (e.g. readings obtained by the scale reading apparatus) (e.g. to determine a compensated measurement which is compensated for position errors about said axis of rotation caused by said axis offset). As will be understood, such subsequent readings could be obtained at one radial location only. For instance, once the information determined in a) (e.g. the axis offset error map and/or function) has been determined, it is possible to obtain readings at just one radial location and the information determined in a) (e.g. the axis offset error map and/or function) can be used to correct a reading obtained at just a single radial location. The scale reading apparatus used for subsequent readings could be the same or a different scale reading apparatus as that used to determine the information in a). Preferably, the scale reading apparatus used for subsequent readings is the same scale reading apparatus as that used to determine the information in a).

The rotary encoder apparatus could be configured such that the information that is determined in a) (e.g. such as the error map and/or function) is determined as part of a calibration routine. The rotary encoder apparatus could be configured with a calibration mode in which the information that is determined in a) is determined, and a reading mode in which the information that is determined in a) is used to correct readings obtained by the scale reading apparatus. As will be understood, the readings obtained by the scale reading apparatus in its reading mode could be used by a machine controller to control the operation of the machine (i.e. control the motion/position of the parts of the machine on which the scale member and scale reading apparatus is mounted). The rotary encoder apparatus could be configured such that the calibration mode and reading mode can operate concurrently. This can be beneficial as the information determined in a) (e.g. such as the error map and/or function) can be updated whilst the rotary encoder apparatus operates in its reading mode (during which its readings are/can be used, e.g. by a machine controller to control the operation of the machine). Optionally, the rotary encoder apparatus is configured such that the information that is determined in a) (e.g. the error map and/or function) is regularly (e.g. continuously) updated (i.e. during the operation of the rotary encoder apparatus/whilst in its reading mode).

As will be understood, the change referred to in "b)" (i.e. the change in the relative arrangement of said scale reading apparatus and the scale member other than or in addition to a change in their relative rotational arrangement about the axis of rotation) can be a change in any of the above-mentioned relative arrangements of the scale reading apparatus and the scale member about which information can be determined in a). In particularly preferred embodiments, said change is a change in the relative translational position of the scale reading apparatus and disc scale member in a plane perpendicular to the scale-track axis. In particular, as mentioned above, a significant source of such a change has been found to be due to an offset between the scale track axis and the axis of rotation (about which the scale member and scale reading apparatus relatively rotate when in use) (which could be referred to as the "axis offset"). Accordingly, preferably said compensated measurement in b) is compensated for position errors about said axis of rotation caused by a change in the relative translational position of the scale reading apparatus and disc scale member in a plane perpendicular to the scale-track axis. Or in other words, preferably said compensated measurement in b) is compensated for position errors about said axis of rotation caused by an offset between the scale track axis and the axis of rotation.

In line with the present invention, it is not necessary for the rotary encoder apparatus to be configured to determine information about the arrangement of said scale reading apparatus relative to scale member (based on the difference between the readings of the scale's radially-extending scale features obtained at the first and second radially-offset locations) in order to be able to compensate readings for errors due to an offset between the axis of rotation and the scale track axis (in other words, it is not necessary for the rotary encoder apparatus to be configured to be able to do "a)"). For example, it is not necessary for the rotary encoder apparatus to be configured to determine a value or set of values, an axis offset error map and/or function in order to be able to compensate readings for errors due to an offset between the axis of rotation and the scale track axis. Rather, the rotary encoder apparatus could be configured to use the current readings of the scale's radially-extending scale features obtained at the first and second radially-offset locations to determine a compensated measurement of the relative position of the scale reading apparatus and the scale member about an axis of rotation about which they are configured to relatively rotate when in use and which is parallel to the scale track axis. The compensated measurement could be calculated from a difference between readings obtained at the first and second radially-offset locations. For example, the compensated measurement could be the result of a weighted difference of the readings obtained at the first and second radially-offset locations. The magnitude of weightings afforded to the readings can be dependent on the radial location at which the reading was obtained. For instance, a compensated measure of the angle of relative rotation of the scale member and the scale reading apparatus "$\theta_c$" could be determined as follows:

$$\theta_c = \frac{A_1 r_1 - A_2 r_2}{r_1 - r_2}$$

where:

$A_1$ = the angle determined from the reading obtained at the first radially-offset location;
$A_2$ = the angle determined from the reading obtained at the second radially-offset location;
$r_1$ = the radial position at which the reading at the first radially-offset location was obtained; and
$r_2$ = the radial position at which the reading at the second radially-offset location was obtained.

The aforementioned change in the relative arrangement of said scale reading apparatus and the scale member other than or in addition to a change in their relative rotational arrangement about the axis of rotation (e.g. the aforementioned change in the relative translational position of the scale reading apparatus and scale member) can occur during relative rotation of the scale member and the scale reading apparatus. This could be, for instance, due to the aforementioned offset between the axis of rotation and the scale track axis (the "axis offset"). Other possible sources of a change in the relative arrangement of said scale reading apparatus and the scale member other than or in addition to a change in their relative rotational arrangement about the axis of rotation (e.g. a change in the relative translation position) (which may or may not occur during relative rotation of the scale member and the scale reading apparatus) include a force on one of the scale reading apparatus or scale member (or on the parts on which they are mounted). For example, such a force could be due to a heavy part being loaded onto the machine on which the rotary encoder apparatus is mounted. The rotary encoder apparatus according to the present invention can compensate for any such changes in the relative translational position. Nevertheless, a particular benefit of the invention is that the rotary encoder apparatus can compensate for changes caused by the axis offset. Accordingly, in a particularly preferred embodiment of the invention the rotary encoder apparatus is configured in b) to use the readings of the scale's radially-extending scale features obtained at the first and second radially-offset locations to determine a compensated measurement of the relative position of the scale reading apparatus and the scale member about an axis of rotation about which they are configured to relatively rotate when in use and which is parallel to the scale track axis, wherein said compensated measurement is compensated for position errors about said axis of rotation caused by an offset between the axis of rotation and the scale-track axis.

As will be understood, the information determined in "a)", corrected/compensated measurement determined from the information determined in "a)" and/or the compensated measurement determined in "b)" can be calculated/determined in the scale reading apparatus (e.g. in the readhead) and/or or by a device separate to the scale reading apparatus (e.g. a machine controller).

The scale reading apparatus can be configured to output (e.g. to another device, such as a machine controller) one or more (position) signals which are dependent on/change with changes in (and for example, can be indicative of) the relative position of the scale reading apparatus and the scale member about the scale-track axis/axis of rotation. As will be understood, the form of such position signals can depend on the type of the rotary encoder apparatus. For instance, the position signals could be analogue quadrature signals, digital quadrature signals, a digital serial output, for example digital words which represent a unique position. Such position signal(s) could be, for example, a compensated measurement. Such position signals could be, for example the compensated measurement determined in "b".

The scale reading apparatus could be configured to output (e.g. to another device, such as a machine controller) the information determined in "a". This could be in addition to said one or more (position) signals (e.g. in addition to a compensated measurement). However, this need not necessarily be the case. For instance, the scale reading apparatus could be configured to store the information determined in "a" internally and use it, e.g. to determine a compensated measurement.

The scale reading apparatus could be, what is commonly known in the field of position encoders as, a readhead. Accordingly, references to "scale reading apparatus" above and below could be replaceable with "readhead".

A compensated measurement of the relative position of the scale reading apparatus and the scale member about the axis of rotation, need not necessarily be an angular position measurement. For instance, a compensated relative rotational position could be a position count value, or an absolute code value, representative of a position along the scale track. Optionally, a compensated measurement of the relative position of the scale reading apparatus and the scale member about the axis of rotation is an angular position measurement (and so a compensated measurement could be referred to as a compensated measurement of the angular position of the scale reading apparatus and the scale member about the axis of rotation, and a compensated measurement can be compensated for angular position errors about said axis of rotation caused by a change in the relative translational position of the scale reading apparatus and scale member in a plane perpendicular to the scale-track axis/axis of rotation). The rotary encoder apparatus could be configured to convert one or more scale readings into an angular position value. Accordingly, a rotary encoder apparatus could be referred to as an angular encoder apparatus.

The readings obtained at the first and second radially-offset locations could comprise readings of radially-extending scale features of two different scale tracks (located at different radial positions). The different scale tracks could comprise the same type of scale feature or could comprise different types and/or forms of scale feature (e.g. incremental vs absolute, optical vs magnetic/capacitive/inductive, phase/amplitude, different scale pitches, etc).

The readings obtained at the first and second radially-offset locations could be readings of radially-extending scale features of one and the same scale track.

Of course, a reading could also be obtained at a further (e.g. third) radially-offset location (relative to the readings obtained at the first and second radially-offset locations), in which case the readings obtained at the first, second and further (e.g. third) radially-offset locations could be readings of radially-extending scale features of one, two or further (e.g. three) different scale tracks (or could all be readings of one and the same scale track, or a combination thereof).

As mentioned above, it can be preferred that the readings of the scale's radially-extending scale features at said first and second radially-offset locations are obtained by at least one sensor within one and the same unit (e.g. readhead, in other words, within one and the same readhead unit). As also mentioned above, the rotary encoder apparatus (in particular the scale reading apparatus) could comprise (e.g. a single readhead which comprises) a first sensor for obtaining the reading(s) at the first radial location and a second sensor for obtaining the reading(s) at the second radial location.

Alternatively, the rotary encoder apparatus (in particular the scale reading apparatus) can comprise a single sensor for obtaining the reading(s) at the first radial location and at the second radial location (accordingly, the same sensor obtains the reading(s) at the first radial location and at the second radial location). Such a single sensor could comprise a one-dimensional array of columnar pixels. The one-dimensional array of columnar pixels could be divided into a plurality of rows wherein each columnar pixel has at least one individual sensing section in each row arranged to contribute to the columnar pixel's output. Each row could be individually activatable so that which one or more of the individual sensing sections in the columnar pixels contribute to each columnar pixel's output can be selectively chosen and changed on a row-by-row basis. The reading obtained at the first radial location could be obtained by, for each of a plurality of the columnar pixels, reading the output generated by the individual sensing sections in a first proper subset of the rows, and the reading obtained at the second radial location could obtained by, for each of a plurality of the columnar pixels, reading the output generated by the individual sensing sections in a second proper subset of the rows, different to the first proper subset. Each columnar pixel could have a shared signal storage region, for storing signal from multiple individual sensing sections in the columnar pixel. The single sensor could be divided into at least four rows, optionally at least six rows, for example at least eight rows. The sensor could comprise at least 256 columnar pixels. An individual sensing section of the single sensor could comprise a photodetector.

As will be understood, there are various ways in which the columnar pixels' output can be read/accessed. For instance, the sensor could be configured such that during use/operation, a columnar pixel's output is continuously streamed to a downstream device/component (e.g. processing device/component which, for example, uses/processes/converts the output). Additionally/alternatively, the encoder/sensor could be configured such that multiple columnar pixels' outputs are combined. For instance, the sensor could comprise an electrograting which is a sensor comprising two or more sets of interdigitated/interleaved pixels, each set being configured to detect a different phase of the signal falling on the sensor. In this case, the outputs of the pixels in the same set can be combined such that their outputs are provided as one output signal to a downstream device/component (e.g. processing device/component).

As will be understood, references herein to "processing device"/ "processor" / "component for processing", and the like, are intended to include bespoke processing devices configured for the specific application (e.g. a field programmable gate array "FPGA") as well as more generic processing devices which can be programmed (e.g. via software) in accordance with the needs of the application in which it is used. Accordingly, suitable processing devices include, for example, a CPU (Central Processor Unit), FPGA (Field Programmable Gate Array), or ASIC (Application Specific Integrated Circuit), or the like.

Preferably, each columnar pixel has a (e.g. has an associated) shared/common/single signal storage region, for storing signal from multiple (e.g. all of the) individual sensing sections in the columnar pixel. The signal storage region could be referred to as an accumulated signal storage region. The signal storage region could be a charge storage region. Accordingly, each columnar pixel could comprise a shared/common/single charge storage region for storing/"accumulating" charge from multiple (e.g. all of the) individual sensing sections in the columnar pixel. The sensor can be configured such that each of the at least one individual sensing sections in each row is able to contribute to a (e.g. "accumulated") signal (e.g. charge) stored at the columnar pixels' signal (e.g. charge) storage region. Preferably, the sensor can be configured such that each signal (e.g. charge) storage region can be selectively addressed and read. As will be understood, this includes a configuration in which the columnar pixels' storage regions are configured to be read out in turn (e.g. sequentially) automatically.

In the case in which the columnar pixels comprise a signal (e.g. charge) storage region, preferably each row (of individual/separate sensing sections) is individually activatable so that which one or more of the individual sensing sections in the columnar pixels contribute to the signal (e.g. charge) stored at each columnar pixel's signal (e.g. charge) storage region can be selectively chosen and changed on a row-by-row basis. This could be achieved, for example, by each individual sensing section comprising its own switch/gate, e.g. transmission/transfer gate. Accordingly, the switch/gate can be used to control which of the individual sensing sections in a columnar pixel transfers/reads out its signal to the columnar pixel's signal storage region. As per the above, the sensor can be configured such that the switches/gates for individual sensing sections in the same row are collectively activatable, on a row-by-row basis.

Preferably, the individual sensing sections in a columnar pixel can be read (can transfer their signal) simultaneously. For example, where present, the individual sensing sections in a columnar pixel can transfer their signal to the columnar pixel's signal storage region simultaneously. For instance, they could be arranged/connected in parallel to the columnar pixel's signal storage region. Each individual sensing section could comprise its own switch/gate, e.g. transmission/transfer gate. Accordingly, the switch/gate can be used to control which of the individual sensing sections in a columnar pixel transfers/reads out its signal to the columnar pixel's signal storage region. As per the preceding paragraph, the switches/gates for individual sensing sections in the same row can be connected such that they are collectively activatable, on a row-by-row basis.

As will be understood, a columnar pixel will be elongate in configuration. The invention can be particularly useful for sensors where the ratio of the pixels' light sensitive length to its light sensitive width is at least 10:1, for example, at least 50:1, for instance at least 100:1.

Optionally, the sensor is divided into at least four rows, optionally at least six rows, for example at least eight rows.

Optionally, the sensor comprises at least 50 columnar pixels, for example at least 100 columnar pixels, in particular at least 256 columnar pixels, for instance at least 500 columnar pixels.

Optionally, the sensor is configured such that the ratio of columnar pixels to the number of rows is not less than 10:1 (i.e. such that there is at least 10 times as many columnar pixels are there are rows).

An individual sensing section can comprise a photodetector (e.g. photodiode). Preferably, all the individual photodetectors in a columnar pixel are configured to detect the same wavelength range.

Optionally, a columnar pixel has only a single individual sensing section (e.g. photodetector) in each row which is arranged to contribute to the columnar pixel's output (e.g. contribute to an accumulated charge stored at the columnar pixel's charge storage region).

The rotary encoder apparatus/scale member could be a magnetic, optical, capacitive, or inductive encoder apparatus/scale member. As will be understood, in the case of an optical rotary encoder apparatus/scale member, the scale reading apparatus can comprise at least one light source which is configured to illuminate the scale track(s). The scale member could be a reflective scale member (in which case the light source(s) and sensor(s) are on the same side of the scale member) or a transmissive scale member (in which case the light source(s) and the sensor(s) are on opposite sides of the scale member). As will be understood, references herein to "light" and "optical" encompasses electromagnetic radiation (EMR) anywhere in the infra-red to the ultra-violet range. For example, the light source could be an infra-red light source.

The rotary encoder apparatus could be configured to generate a fringe (e.g. fringe field) which is detected by the scale reading apparatus. The fringe could change (e.g. move) with relative movement of the scale member and the scale reading apparatus. The fringe could comprise an interference fringe. The substantially radially-extending scale features could comprise a series of features configured to diffract light. Optionally, the scale reading apparatus comprises one or more diffraction gratings for producing said fringe. For example, the one or more diffraction gratings can interact with light heading towards/from the scale member so as to produce said fringe. Optionally, said fringe is produced by the recombination of diffracted orders of light from the scale member and diffraction grating (and optionally in that order).

The one or more sensors of the scale reading apparatus could be arranged at the conjugate plane of the scale member (in particular of the at least one scale track), for example, such that an image of the scale member (in particular an image of the at least one scale track) is formed on its one or more sensors. Accordingly, for example, optionally, the scale reading apparatus detects/captures an image of the scale member/at least one scale track. Accordingly, the scale reading apparatus can be configured to image the scale member/at least one scale track onto its one or more sensors. Optionally, the scale reading apparatus comprises one or more optical elements (e.g. one or more lenses) configured to form said image. Suitable optical elements include refractive (e.g. cylindrical/spherical/Fresnel lenses) or diffractive (e.g. Fresnel Zone Plate) optical elements. As will be understood, if the scale reading apparatus comprises a one-dimensional array of pixels, then it will detect/capture a one-dimensional image. Accordingly, optionally, said one or more optical elements could be configured to form only a one-dimensional image. However, this need not be the case and said one or more optical elements could be configured to form a two-dimensional. Indeed, it can be preferable for said one or more optical elements to form a two-dimensional image.

The rotary encoder apparatus could comprise an incremental position rotary encoder apparatus. Accordingly, the at least one scale track could comprise an incremental scale track. The incremental scale track could comprise a series of (generally) periodically arranged features. As will be understood, one or more reference features, next to or embedded within said at least one track could be provided.

The rotary encoder apparatus could comprise an absolute position rotary encoder apparatus. Accordingly, the at least one scale track could comprise an absolute scale track. In other words, the at least one scale track can comprise features defining absolute position information. The at least one scale track can comprise features defining a series of unique absolute positions. The features defining the absolute position information could be contained in just one track, or in a plurality of tracks. In addition to features defining absolute position information the scale member can comprise features defining incremental position. The features defining the incremental position information can be the same features as those defining absolute position (e.g. absolute position information can be embedded within incremental position features, such as for example described in US7499827). Optionally, the scale member comprises separate incremental and absolute scale tracks.

Either way (whether absolute or incremental), the scale reading apparatus can be used to measure the relative position (or a derivative thereof) of the scale reading apparatus and the scale member about the axis of rotation.

According to a second aspect of the invention there is provided a rotary encoder apparatus comprising: i) a scale member on which is provided at least one curved scale track that is centred on and extends at least partially annularly around a scale-track axis, the at least one curved scale track comprising substantially radially-extending scale features; ii) a scale reading apparatus (e.g. a readhead) configured to obtain readings of the substantially radially-extending scale features, at first and second radially-offset locations; wherein the rotary encoder apparatus is configured to, on the basis of said readings obtained at first and second radially-offset locations, determine information about (e.g. a measure of), and/or compensate a reading of the relative position of the scale member and the scale reading apparatus (about the axis of rotation) for,: the offset between the scale track axis and the axis of rotation about which the scale member and scale reading apparatus relatively rotate when in use. As will be understood, the features described above in connection with the first aspect of the invention are equally applicable to this aspect of the invention.

According to a third aspect of the invention there is provided a rotary encoder apparatus comprising: i) a scale member on which is provided at least one curved scale track that is centred on and extending at least partially annularly around a scale-track axis, the at least one curved scale track comprising substantially radially-extending scale features; and ii) scale reading apparatus configured to obtain, at first and second radially-offset locations, readings of the scale's substantially radially-extending scale features; the scale member and the scale reading apparatus being configured to rotate relative to each other about an axis of rotation which is substantially parallel to the scale-track axis and in which the rotary encoder apparatus is configured use the readings of the scale's radially-extending scale features obtained at both the first and second radially-offset locations to: a) determine information about the offset between the scale track axis and axis of rotation; and/or b) determine a compensated measurement of the relative position of the scale reading apparatus and the scale member about an axis of rotation about which they are configured to relatively rotate when in use and which is parallel to the scale track axis, wherein said compensated measurement is compensated for errors caused by the offset between the scale track axis and axis of rotation. As will be understood, the features described above in connection with the first aspect of the invention are equally applicable to this aspect of the invention.

According to a fourth aspect of the invention there is provided a method of operating a rotary encoder apparatus that comprises a scale reading apparatus and a scale member on which is provided at least one curved scale track that is centred on and extending at least partially annularly around a scale-track axis, the at least one curved scale track comprising substantially radially-extending scale features, the scale member and the scale reading apparatus being configured to rotate relative to each other about an axis of rotation which is substantially parallel to the scale-track axis, the method comprising using readings of the scale's substantially radially-extending scale features obtained, by the scale reading apparatus, at both the first and second radially-offset locations, to determine: a) information about the arrangement of said scale reading apparatus relative to scale member based on the difference between the readings of the scale's radially-extending scale features obtained at the first and second radially-offset locations; and/or b) a compensated measurement of the relative position of the scale reading apparatus and the scale member about the axis of rotation, wherein said compensated measurement is compensated for position errors about said axis of rotation caused by a change in the relative translational position of the scale reading apparatus and scale member in a plane perpendicular to the scale-track axis. As will be understood, the features described above in connection with the first aspect of the invention are equally applicable to this aspect of the invention. For example, the information that is determined in a) could comprise information about (e.g. a measure of) the offset between the scale track axis and the axis of rotation. This information could be determined from (radially-offset) readings of the scale's substantially radially-extending scale features (i.e. at said first and second radially-offset locations) obtained at a plurality of different relative angular orientations of the scale reading apparatus and the scale member about the axis of rotation. Such (radially-offset) readings obtained at a plurality of different relative angular orientations of the scale reading apparatus and the scale member about the axis of rotation, can be used to determine an axis offset error map and/or function. Accordingly, the information that is determined in a) (e.g. the measure of the offset between the axis of rotation and the scale track axis) can comprise an axis offset error map and/or function which can be used to compensate scale readings for errors caused by the axis offset.

According to a fifth aspect of the invention there is provided a method of determining and/or compensating for any offset between: (a) a scale axis of a scale member, the scale member having a planar surface on which is provided at least one curved scale track that extends and is centred around the scale axis comprising a series of substantially radially-extending scale features, and (b) an axis of rotation about which the scale member and a scale reading apparatus_for reading the scale member are configured to rotate relative to each other, wherein the axis of rotation and the scale axis of the scale member are substantially parallel, in which the method comprises using readings of the scale's substantially radially-extending scale features obtained at first and second radially-offset locations to determine and/or compensate scale readings for any offset between (a) and (b). As will be understood, the features described above in connection with the first aspect of the invention are equally applicable to this aspect of the invention.

According to sixth aspect of the invention there is provided a method of operating a rotary encoder apparatus comprising: i) a scale member on which is provided at least one curved scale track that is centred on and extending at least partially annularly around a scale-track axis, the at least one scale track comprising substantially radially-extending scale features; and ii) a readhead, the readhead comprising a sensor for sensing the scale, the sensor comprising a one-dimensional array of columnar pixels, configured such that the one-dimensional array of columnar pixels is divided into a plurality of rows wherein each columnar pixel has at least one individual sensing section in each row arranged to contribute to the columnar pixel's output, wherein each row is individually activatable so that which one or more of the individual sensing sections in the columnar pixels contribute to each columnar pixel's output can be selectively chosen and changed on a row-by-row basis, wherein the scale member and the scale reading apparatus are configured to rotate relative to each other about an axis of rotation, the method comprising: obtaining a reading of the scale member's radially-extending features by, for each of a plurality of the columnar pixels, reading the output (e.g. the charge accumulated at the charge storage region of the columnar pixel which was) generated by the individual sensing sections in a first proper subset of the rows, and obtaining another reading of the scale member's radially-extending features by, for each of a plurality of the columnar pixels, reading the output (e.g. the charge accumulated at the charge storage region of the columnar pixel which was) generated by the individual sensing sections in a second proper subset of the rows, different to the first proper subset. The method can comprise using/processing (e.g. comparing) the readings obtained from the first and second proper subsets to: a) determine at least one property of the rotary encoder apparatus (e.g. the at least one property could comprise the offset between the scale track axis and the axis of rotation); and/or b) determine a compensated measurement of the relative position of the readhead and the scale member about the axis of rotation, wherein said compensated measurement is compensated for position errors about said axis of rotation caused by a change in the relative translational position of the scale reading apparatus and scale member in a plane perpendicular to the scale-track axis (e.g. due to an offset between the axis of rotation and the scale track axis). As will be understood, the features described above in connection with the first aspect of the invention are equally applicable to this aspect of the invention. Accordingly, for example, the information that is determined in a) could comprise information about (e.g. a measure of) the offset between the scale track axis and the axis of rotation. Furthermore, for example, said compensated measurement of the relative position of the scale reading apparatus and the scale member about the axis of rotation could be an angular position measurement (and so the compensated measurement could be referred to as a compensated measurement of the angular position of the scale reading apparatus and the scale member about the axis of rotation, and said compensated measurement can be compensated for angular position errors about said axis of rotation caused by a change in the relative translational position of the scale reading apparatus and scale member in a plane perpendicular to the scale-track axis/axis of rotation).

According to a seventh aspect of the invention there is provide a rotary encoder apparatus comprising: i) a disc scale member on which is provided at least one scale track that is centred on and extends annularly around a scale-track axis, the at least one scale track comprising substantially radially-extending scale features; and ii) scale reading apparatus configured to obtain readings of the scale's substantially radially-extending scale features, at first and second radially-offset locations; in which the rotary encoder apparatus is configured to: a) determine information about the arrangement of said scale reading apparatus relative to disc scale member based on the difference between the readings of the scale's radially-extending scale features obtained at the first and second radially-offset locations; and/or b) use the readings of the scale's radially-extending scale features obtained at the first and second radially-offset locations to determine a compensated measurement of the relative position of the scale reading apparatus and the disc scale member about an axis of rotation about which they are configured to relatively rotate when in use and which is parallel to the scale track axis, wherein said compensated measurement is compensated for position errors about said axis of rotation caused by a change in the relative translational position of the scale reading apparatus and disc scale member in a plane perpendicular to the scale-track axis. As will be understood, the features described above in connection with the first aspect of the invention are equally applicable to this aspect of the invention.

Embodiments of the invention will now be described, by way of example only, with reference to the following drawings, in which:

Figures 1a and 1b are plan and side views of a prior art configuration for determining the offset between a scale axis of a disc scale member and the axis of rotation of the machine part on which the disc scale member is mounted;

Figures 2a and 2b are plan and isometric views of a rotary encoder apparatus according to a first embodiment of the present invention;

Figures 3a and 3b are schematic plan views of a rotary encoder apparatus according to different embodiments of the invention;

Figure 4 is a plan view of a rotary encoder apparatus according to the invention, and illustrates the effect of relative translational movement of the scale reading apparatus and disc scale member;

Figure 5 is a schematic drawing of a sensor suitable for use with an example embodiment of the invention; and

Figure 6 is a detailed view of two columnar pixels of the sensor of Figure 5.

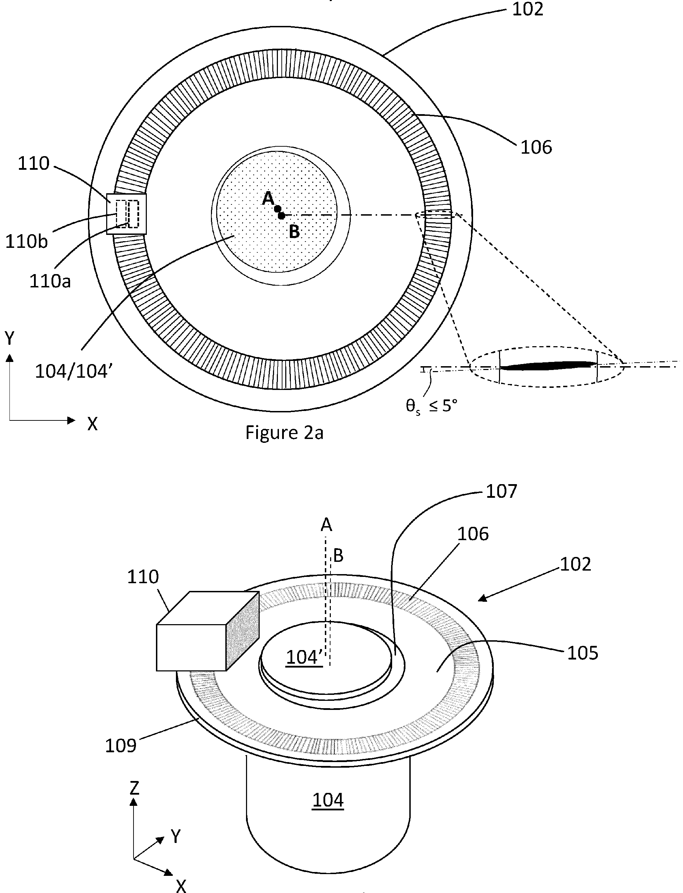

Referring to Figures 2a and 2b, there is shown a scale member 102 in the form of a disc scale member, which has been mounted on a rotary part 104 of a machine (not shown) which is configured to rotate about an axis of rotation labelled A in Figures 2a and 2b. The disc scale member 102 comprises a series of scale features 106 which define a scale that is centred on and extends annularly around a scale axis labelled B in Figures 2a and 2b. Accordingly, as shown, the scale is substantially circular in shape and has a constant radius around the scale axis. The scale features 106 are formed on a planar surface 105 of the disc scale member 102, and as shown, the scale axis B extends normal to the planar surface 105. In the embodiment shown, the planar surface 105 is provided by a planar body/disc having a circular outer perimeter/circumferential edge. The scale features 106 are substantially "radially-extending" in that each feature extends in a substantially radial direction (in other words, substantially parallel to the radial vector of the scale track). Accordingly, the scale features 106 are not parallel to each other but rather fan-out in a radial direction. Whilst it might be preferred that each scale feature extends perfectly radially, as will be understood this is unlikely due to manufacturing tolerances. Accordingly, as illustrated by the magnified elliptical section of Figure 2a, in this document, "substantially radial" means that the angle between: i) a line (illustrated by the dash-and-double-dot line) extending parallel and coincident with the elongate extent of the scale feature; and ii) the radial vector of the scale track (illustrated by the dot-and-dash line), is less than 5°, and preferably less than 2.5°, more preferably less than 1°. As also illustrated by Figure 2a, each scale feature might not be perfectly rectangular, but could be shaped differently (in the embodiment shown, elliptically shaped), hence why the angle of the feature is measured along a line parallel to and coincident with the elongate extent of the scale feature. Radially-extending features can be preferred over non-radial features (such as those described in DE102008043556) for manufacturing reasons (especially for metal scales) and metrological performance reasons.

During use, a scale reading apparatus (e.g. a "readhead") 110 can be mounted to another part of the machine (not shown) and positioned so as to read the scale features 106 so as to be able to determine and report to an external device relative motion between/the relative position of the disc scale 102 and the readhead 110.

In the example shown, the disc scale member 102 is shown mounted on a cylindrical shaft 104 of a machine. The disc scale member 102 comprises a planar body, and in particular, the disc scale member 102 is formed from a thin sheet of material, in this embodiment, from stainless steel, which is about 1mm thick. For context, the diameter of the disc scale member 4 in this embodiment is about 50mm. As will be understood, the invention is not limited to discs of such a size or shape, and such dimensions are given merely as an example of a disc. Also, the disc scale member could be made from other metallic materials, such as aluminium, or non-metallic materials such as glass.

In the embodiment described, the disc scale member has a central hole 107 extending through the planar body of the disc scale member 102, and the diameter of the central hole 107 is oversized such that it is larger than the part 104'of the shaft which extends through the hole 107. This means that there is a sufficiently large play between the disc scale member 102 and the part 104' of the shaft so as to enable the radial position of the disc scale member 102 to be adjusted. As will be understood, other configurations are possible, including discs which do not have a central hole and/or the where the disc scale member 102 is mounted on a flat end face of the machine/rotary part 104 (e.g. where there is not a protruding part 104'). Optionally, the disc may have some form of self-centring or other mounting/adjusting means, for instance as described in WO2021/116660, WO2022/074368, WO2022074371 and WO2022171994.

As shown in Figure 2a, the disc scale member 102 has been mounted on the rotary part 104 of the machine at a radial location where the scale axis B is offset from the axis of rotation A. As shown, the scale axis and axis of rotation are substantially parallel to each other (i.e. within 5°, preferably within 2.5°, more preferably within 1°). In accordance with the invention, and as will be described in more detail below, such an offset can be determined and/or compensated for using readings of the scale features taken at at least first and second radially offset locations.

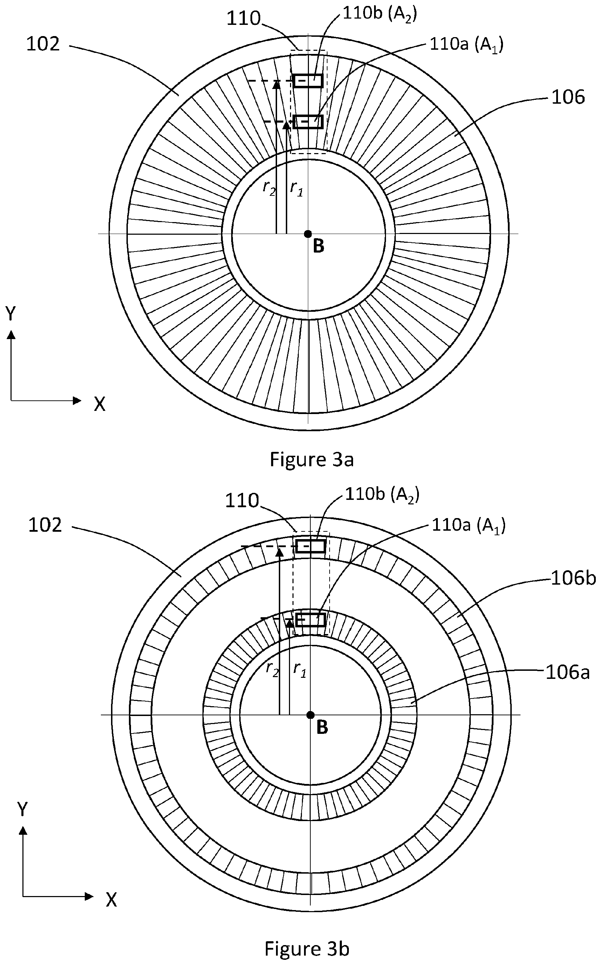

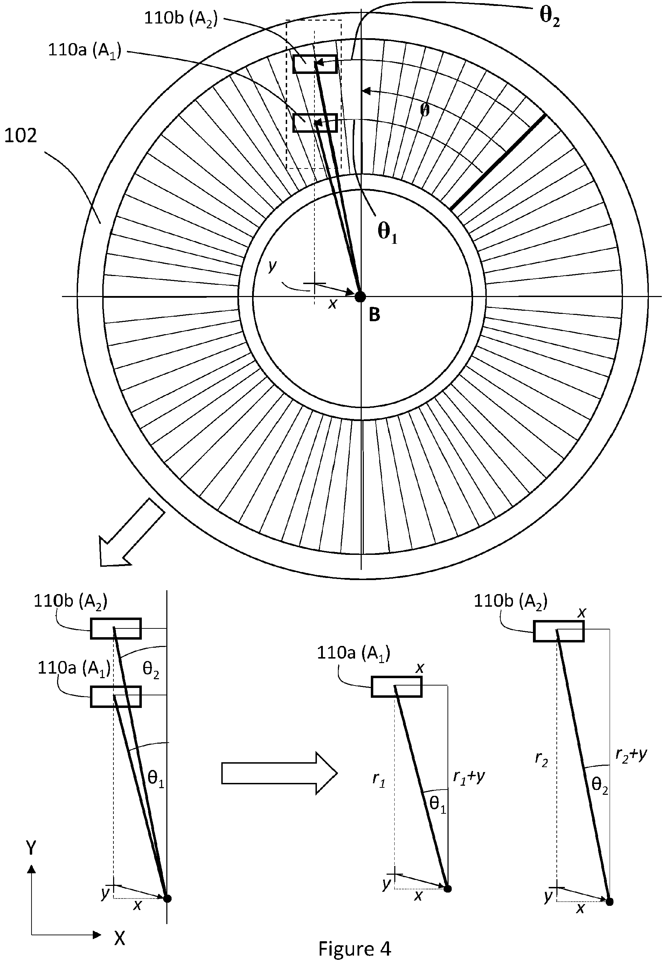

In accordance with one embodiment of the invention, the outputs of two radially offset scale sensors 110a, 110b (schematically illustrated in Figure 2a) can be used to determine: a) information about the relative arrangement of said scale reading apparatus/readhead 110 and the scale member 102 other than or in addition to information about their relative rotational arrangement about the axis of rotation A (e.g. a measure of the offset between the axis of rotation A and the scale track axis B); and/or b) a measurement of the relative angular position of the scale and readheads about the axis of rotation that has been compensated to reduce or remove the effects of a change in the relative arrangement of said scale reading apparatus/readhead 110 and the scale member 102 other than or in addition to a change in their relative rotational arrangement about the axis of rotation A (e.g. reduce or remove the effects of any offset between the axis of rotation A and the scale track axis B on the measurement of the relative angular position of the scale and readheads about the axis of rotation). This will be explained in more detail below with reference to Figures 3 and 4.

The information determined in a) could be recorded and/or determined over time. For example, information about the relative arrangement of said scale reading apparatus/readhead 110 and the scale member 102, other than or in addition to information about their relative rotational arrangement about the axis of rotation A, could be recorded and/or determined over time to assess how the performance of the encoder apparatus and/or the machine on which it is mounted changes over time. Optionally, the encoder apparatus/machine could be configured to alter its operation (e.g. issue a warning, stop the machine) if the information determined in a) is indicative that the performance of the encoder apparatus and/or the machine has changed beyond a predetermined threshold.

The encoder apparatus might be configured not to use the information determined in a). For example, it could be configured to merely output the information determined in a). A device separate to the scale reading apparatus (and optionally separate to the encoder apparatus as a whole) could receive the information determined in a) and use it as it sees fit.

Figure 3a shows a scale disc member 102 similar to that of Figure 2 (and like parts share like reference numerals), but with the scale track 106 enlarged to aid the following explanation of the present invention. Consider the situation shown in Figure 3a, where the two radially offset scale sensors 110a, 110b have been arranged directly radially in line with the centre of the scale track axis B of the disc scale member 102. As shown, the first scale sensor 110a is provided at a first radius $r_1$ and the second scale sensor 110b is provided at a second radius $r_2$. In Figure 3a each of the two radially offset scale sensors 110a, 110b sees a different scale period because they are at different radiuses of the same scale track 106. As is known, the relative angle between the scale track 106 and each scale sensor 110a, 110b can be calculated by dividing the (interpolated) scale count of a scale sensor 110a, 110b by the total scale line count, and multiplying by 360. As will be understood, a similar process can be used for an absolute encoder to determine the angle between the scale track 106 and a scale sensor 110 (e.g. absolute position as determined by the scale sensor 110, divided by the absolute scale's annular length, multiplied by 360). The embodiment of Figure 3b differs to that of Figure 3a in that the disc scale member 102 comprises two separate scale tracks 106a, 106b, both extending annularly around the same scale track axis B. Due to being separate tracks, they could (unlike the single-track embodiment of Figure 3a) have the same scale period, although this need not necessarily be the case and in the embodiment shown they do not have the same scale period. As per the embodiment of Figure 3a, the angle measured by each scale sensor 110a, 110b can be calculated from the interpolated count divided by the associated track's line-count, multiplied by 360.

Now we will consider what happens when the disc scale member 102 moves. Any in-plane movement (e.g.

rotation about the axis of rotation A and/or translation in the plane that extends perpendicular to the axis of rotation, i.e. the X-Y plane of the Figures) can be represented by the superposition of the scale rotation ($\theta$) and the scale x-y translation. This is schematically illustrated in Figure 4 where, as well as a rotation about the axis of rotation by an angle "$\theta$", the scale disc member 102 has translated in the X-Y plane, by an amount "x, y". Regardless of whether the first 110a and second 110b sensors are incremental or absolute, or use the same scale period or different tracks, the above-described method for determining angle can be used by each of the first 110a and second 110b scale sensors (e.g. they each take their interpolated count/position and divide by the line-count/annular length of their respective scale track, and multiply by 360 degrees). It can be seen from Figure 4 that, in the situation where there has been translation in the X-Y plane, such a calculation of angle would be wrong because the translational movement has also acted in a direction to change the count at the scale sensor by an amount proportional to the values "x, y".

In the example shown in Figure 4, the angle reported by the first scale sensor 110a will be:

$$A_1 = \theta + \theta_1 \tag{1}$$

and the angle reported by the second scale sensor 110b will be:

$$A_2 = \theta + \theta_2 \tag{2}$$

As explained above, such relative translation of the scale sensors 110a, 110b and the disc scale member 102 in the X-Y plane can take place when the disc scale member 102 and scale sensors 110a, 110b rotate relative to each other about the axis of rotation A, due to there being an offset between the axis of rotation A and the scale track axis B. The offset could be caused by the scale track 106 being mounted eccentrically/offset relative to the bearing/axis of rotation A of the part 104 on which the disc scale member 102 is mounted, so the centre of the scale track B rotates around the bearing/axis of rotation A with the disc scale angle. Assuming the magnitude and direction of the eccentricity/offset is fixed, the "x" translation will be sinusoidal with angle with an amplitude equal to the amount of the offset/eccentricity, and the "y" translation will be similarly sinusoidal but with a 90 degree phase difference from the "x" translation. Of course, the magnitude and/or direction may not be fixed. For instance, if bearing is not stiff, has non-repeatable wander, and/or the axis has some other form of flexibility, then x and y translations can occur independently of angle and can change with time.

Regardless of the reason for the eccentricity/offset, it can be advantageous to determine a) the eccentricity/offset and/or b) a reading that is compensated for the error caused by the offset. An example embodiment of how this could be done is follows:

From geometry:

$$\tan(\theta_1) = \frac{x}{r_1 + y} \tag{3}$$

$$\tan(\theta_2) = \frac{x}{r_2 + y} \tag{4}$$

For small eccentricity/offset relative to the scale radius, (e.g. the eccentricity/offset is less than 1% of radius), then the estimate of the effect of the eccentricity/offset will be within ~1% by making the following simplification:

$$\frac{x}{r_1 + y} \approx \frac{x}{r_1} \tag{5}$$

Also, for small angles (remember eccentricity, and therefore x, is much less than radius), $\tan \theta \approx \theta$, so:

$$\theta_1 = tan^{-1}\left(\frac{x}{r_1}\right) \approx \frac{x}{r_1} \tag{6}$$

and:

$$\theta_2 = tan^{-1}\left(\frac{x}{r_2}\right) \approx \frac{x}{r_2} \tag{7}$$

For eccentricities of less than 1%, this simplification makes less than 0.003% difference.
Accordingly:

$$x = r_1\theta_1 \tag{8}$$

$$x = r_2\theta_2 \tag{9}$$

The first 110a and second 110b scale sensors also both measure the angle of rotation of the scale, θ, so:

$$A_1 = \theta + \theta_1 = \theta + \frac{x}{r_1} \tag{10}$$

$$A_2 = \theta + \theta_2 = \theta + \frac{x}{r_2} \tag{11}$$

The difference in readings output by the first 110a and second 110b scale sensors is:

$$A_1 - A_2 = \frac{x}{r_1} - \frac{x}{r_2} = x\frac{r_2 - r_1}{r_1 r_2} \tag{12}$$

which allows a determination of the instantaneous component of the eccentricity/offset in a direction parallel to the measuring direction of the scale sensors (which could be referred to as the "tangential component") to be made:

$$x = (A_1 - A_2)\frac{r_1 r_2}{r_2 - r_1} \tag{13}$$

Alternatively, the actual/compensated angle of rotation could be found from:

$$A_1 r_1 = \theta r_1 + x \tag{14}$$

$$A_2 r_2 = \theta r_2 + x \tag{15}$$

So:

$$A_1 r_1 - A_2 r_2 = \theta(r_1 - r_2) \tag{16}$$

And:

$$\theta = \frac{A_1 r_1 - A_2 r_2}{r_1 - r_2} \tag{17}$$

Formulae 13 and 17 are derivations of the same equations, thus are both equally susceptible to noise. Calculating the compensated angle from a weighted difference will multiply noise and so the calculation of instantaneous angle can be susceptible to noise error. Formula 13, which estimates the eccentricity/offset, is similarly susceptible to noise but averaging could be applied if required to reduce the impact of noise on accuracy. For example, if the eccentricity/offset that is to be corrected is assumed to be fixed (i.e. the eccentricity/offset is assumed not to vary/wander over time), the calculation of the eccentricity/offset can be calculated over a plurality of revolutions. Calculations of the offset from multiple revolutions can be used to add more averaging to the calculation of the offset.

As will be understood, the adverse effect of the radial component of the eccentricity/offset on the angles $A_1$, $A_2$ calculated by the first 110a and second 110b scale sensors is significantly smaller than the tangential component of the eccentricity/offset, and so for many applications the radial component of the eccentricity/offset can be ignored/not determined whilst still obtaining significant benefit.

A benefit of this embodiment of the invention includes that the determination of the offset, and/or compensation of the angular measurement, can be based on current scale readings. In other words, it does not rely on a calibration stage during which the offset is determined for a plurality of different angular orientations, and for which, for example, a correction factor or error map is generated which can be used to correct subsequent measurements. Accordingly, such a calibration stage can be omitted. Furthermore, because this method relies on current scale readings, the method can be used to accurately compensate for any such offset between the axis of rotation A and scale track axis B, even if it varies during operation (e.g. due to bearing wander). Nevertheless, if desired, an error map/function can be generated using the outputs of the first 110a and second 110b scale sensors, by way of analysing the differences between $A_1$ and $A_2$ for a plurality of different relative angular positions of the disc scale 102 about the axis of rotation. This can be generated during a specific calibration step, and/or could be generated/updated during operation (e.g. continuously or at intervals).

The above description relies on the use of two radially offset readings. Of course, more than two radially offset readings could be obtained and used to determine the offset/compensate the measurements, with appropriate alteration of the above-described maths.

For the sake of simplicity, the above calculations for determining/compensating for the offset of the axis of rotation A and the scale track axis B assume that the first 110a and second 110b scale track sensors are arranged relative to each other such that: i) their measurement directions extend parallel to each other; ii) they are laterally offset relative to each other in a direction perpendicular to their measurement direction; iii) they are positioned along their measurement directions relative to each other such that the point on the first scale sensor at which its position reading is calculated with respect to (e.g. its centre position) and the point on the second scale sensor at which its position reading is calculated with respect to (e.g. its centre position), both lie on the same line, said line extending perpendicular to the measurement direction of the first and second scale sensors; and iv) they are configured such that the first and second radially offset readings were obtained simultaneously. Indeed, this is the configuration shown and described in the above embodiment. As will be understood, this need not necessarily be the case, but appropriate alterations to the above-described math may be required to compensate for such variations from the above assumptions, if such variations lead to a significant adverse effect on the determination/compensation of the offset of the axis of rotation A and the scale track axis B.

In the above embodiment the first 110a and second 110b scale track sensors are provided together in one readhead 110. This can be beneficial to aid installation/set up because only one readhead needs to be mounted to the machine. However, this need not necessarily be the case and the first 110a and second 110b scale track sensors could be provided in separate readheads which are mounted separately to the machine.

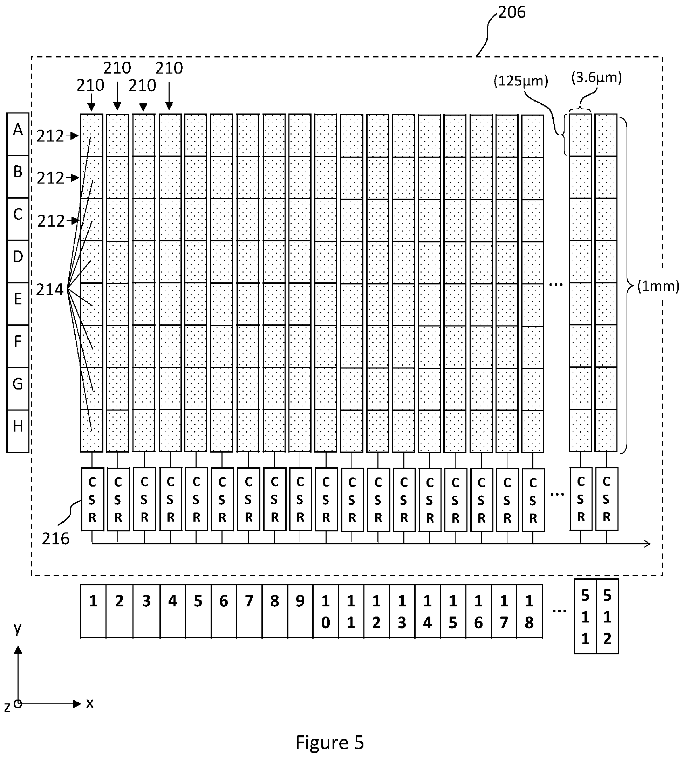

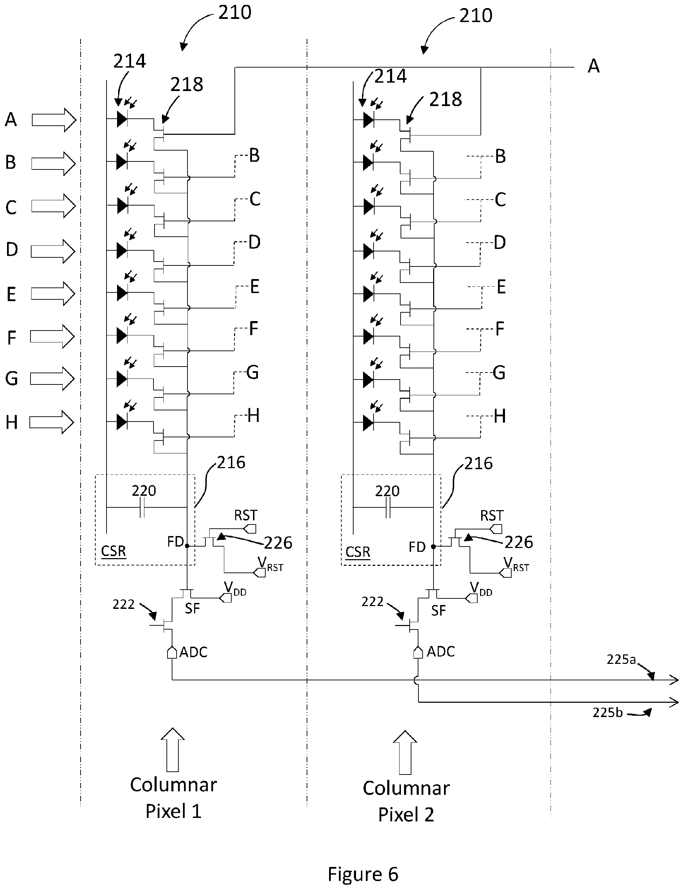

An alternative embodiment of the invention will be described with reference to Figures 5 and 6. In this embodiment, instead of two separate sensors, a single sensor, is used. As described in more detail in the following paragraphs, in this embodiment the sensor comprises a one-dimensional array of columnar pixels. The one-dimensional array of columnar pixels is divided into a plurality of rows wherein each columnar pixel has at least one individual sensing section in each row arranged to contribute to the columnar pixel's output, and wherein each row is individually activatable so that which one or more of the individual sensing sections in the columnar pixels contribute to each columnar pixel's output can be selectively chosen and changed on a row-by-row basis. Accordingly, in other words, each row could be individually activatable so that the subset of the rows of individual sensing sections which contribute to each columnar pixel's output can be selectively chosen and changed (wherein, as will be understood, a subset can include one, some or even all of the rows, *c.f.* a proper subset which cannot include all of the rows).

Figure 5 schematically illustrates the configuration of such a sensor 206 in accordance with one embodiment of the invention. As shown, the sensor 206 comprises 512 columnar pixels 210, labelled 1 to 512 in Figure 5. Each columnar pixel is individually addressable. Rather than each columnar pixel 210 comprising a single elongate photodiode of 1mm long and 3.6$\mu$m wide, in accordance with the present invention, each columnar pixel is divided into eight rows 212, labelled A to H in Figure 5, wherein an individual photodiode 214 is provided in each row of each columnar pixel. Accordingly, in the embodiment described, each columnar pixel 210 is made up of eight separate photodiodes 214, wherein each of the eight photodiodes in a columnar pixel is approximately 125$\mu$m long (and 3.6$\mu$m wide). Each columnar pixel 210 is configured such that each of its photodiodes 214 can contribute to the columnar pixel's output. In the embodiment described, each columnar pixel comprises a Charge Storage Region (CSR) 216 (which could comprise a Floating Diffusion (FD) node, for example) where the charge from each of the columnar pixels' photodiodes can accumulate. Accordingly, when a columnar pixel 210 is read, the value provided by a columnar pixel is the accumulated charge stored at the CSR.

Figure 6 shows the configuration of a columnar pixel 210 of Figure 4 in more detail. In particular, Figure 6 shows columnar pixel numbers 1 and 2 of Figure 5. As shown, each columnar pixel 210 comprises eight individual photodiodes 214, each of which are connected to a CSR 216 for the columnar pixel. In this particular embodiment, each row (A to H) of photodiodes 214 is individually activatable. As shown, each photodiode 214 in a columnar pixel 210 is connected to the columnar pixel's CSR 216 via a (transmission) switch/gate, in this embodiment a switch transistor 218. When the switch transistor 218 for any given photodiode 214 is closed, light hitting the photodiode 214 causes charge to be stored at the columnar pixel's CSR 216, in particular in this embodiment at a capacitor 220. Any combination of rows (A to H) can be turned on (by activating the line so as to close its switch transistors 218) such that the charge from the photodiodes 214 in those rows is caused to be stored at the at the columnar pixel's CSR 216, in particular, in this embodiment, at the columnar pixel's capacitor 220. As illustrated in Figure 5, the switch transistors 218 of photodiodes 214 in the same row across all columnar pixels (in other words, all of the sensor's photodiodes in the same row, e.g. row A) are connected such that they are turned on or off collectively/"as one". Figure 6 explicitly depicts that the switch transistors 218 of row A are connected together via a line, but for the sake of clarity of depiction, broken dotted lines are used to schematically illustrate that the switch transistors 218 in other rows are connected together, "as one" (i.e. the switch transistors 218 row B are connected together, "as one", the switch transistors 218 row C are connected together, "as one", and so on). As will be understood, it might not be practical to have a single line which connects all switch transistors in a row (e.g. due to electrical capacitance build up), and so it might be necessary to use a fan-out circuit to connect multiple switch transistors together. Nevertheless, all switch transistors 218 in any given row are configured (in this embodiment) to be activated or deactivated collectively/"as one".

Each columnar pixel 210 can be addressed and read via an address switch 222. Closing the address switch 222 causes the voltage stored at the CSR 216 to be output via a source follower (SF) amplifier and an ADC, to an external processor via an output line 225a, 225b. Each columnar pixel 210 can be addressed and read individually/separately in the same way. Once a columnar pixel 210 has been read, the charge/voltage stored at the columnar pixel's CSR 216 can be reset by a reset signal RST causing a reset switch 226 to close, thereby setting the capacitor 220 at a known, predetermined voltage $V_{RST}$. Such a reset could be effected for all columnar pixels simultaneously. As will be understood, each columnar pixel could have its own output line as illustrated in Figure 6, or some or all of the columnar pixels could share one or more output lines (e.g. and therefore their outputs are serially read out).

With such a sensor, radially offset readings can be obtained, e.g. by taking a first reading using rows A to D and then taking a second reading using rows E to H. Differences in the angular position determined from the first and second readings can be used to determined and/or compensate for any offset between the axis of rotation A and scale-track axis B in the same way as described above in connection with Figures 2 and 3. Due to the configuration of the sensor of the embodiment of Figures 5 and 6, it cannot capture the first and second radially offset readings simultaneously. Accordingly, as will be understood, if the scale and readhead are rotating relative to each other about the axis of rotation, then this may need to be compensated for (depending on the relative velocity and the time between the first and second readings). For instance, if necessary, one or both of the first and second radially offset actual readings could be extrapolated/interpolated so as to obtain radially offset estimated readings which represent readings that would have been expected to have been obtained had they been captured simultaneously. Alternatively, if the velocity is sufficiently low and/or if the time between the captures is sufficiently short, then the fact that the first and second readings are not obtained simultaneously can be ignored.

For the purposes of the invention, only two selectable rows are necessary (because only two radially offset readings are, at a minimum, required). Accordingly, for example, rows A to D could be combined into one row, and rows E to H could be combined into another row. Therefore, the sensor of Figures 5 and 6 could be modified accordingly so as comprise only two selectable rows. Of course, it might be preferred in some instances to have more than two selectable rows, e.g. for calculating other aspects of the scale, and/or if the method of determining/compensating for the offset involves the use of more than two radially offset readings.

In addition/alternatively to the above-described embodiments, the readings obtained at first and second radially-offset locations could be used to provide a measure of information about the arrangement of the scale reading apparatus/readhead relative to the disc scale member other than a measure of the axis offset. For instance, the difference in the readings obtained at the first and second radially-offset locations could be used to provide information indicative of any yaw of the scale reading apparatus/readhead relative to the disc scale member (e.g. the extent of rotation of the scale reading apparatus about an axis that extends through the scale reading apparatus and that extends parallel to the scale track axis). Similarly, the readings obtained at first and second radially-offset locations could be used to provide information indicative of the translational position of the scale reading apparatus relative to the disc scale member (e.g. information indicative of/a measure of the offset between the axis of rotation and the scale-track axis). Such information could be useful, for example, during a set up/installation stage whereby such information could be presented to a user or output to a device responsible for setting up the scale reading apparatus/disc and make appropriate adjustments until the desired arrangement is achieved.

The embodiments described above concern a disc scale member having a scale track axis that extends fully annularly around the scale track axis, and wherein the disc scale member and scale reading apparatus can rotate infinitely about the axis of rotation. However, as will be understood, these are not essential features of the invention and the invention is applicable to different types of scale member and configurations. For instance, the scale member could comprise a curved scale track that extends only partially annularly around the scale-track axis (e.g. the scale track is an arc shape as opposed to a full circular shape). In such a case, the scale member might not have the shape or appearance of a full-circular disc. Furthermore, it might be the case that the scale member and scale reading apparatus cannot rotate by a full revolution. Where this is the case, it is common for the scale member to comprise an arcuate scale track as opposed to a full circular scale track.

As mentioned above, the readings obtained at the first and second radially-offset locations need not necessarily be obtained simultaneously. Indeed, it would be possible for the readings obtained at the first and second radially-offset locations to have been obtained at different revolutions for the disc scale member. For instance, a first set of readings can be obtained at the first radially-offset location over one revolution, and a second set of readings can be obtained at the second radially-offset location over a different, subsequent revolution.

The above-described embodiments all comprise two radially-offset sensors, or a single sensor which can obtain readings at two radially offset locations without being physically moved radially. However, as will be understood, this need not necessarily be the case. For instance, the scale reading apparatus could comprise just one readhead with one sensor, which is physically moveable between first and second radially-offset locations (e.g. along a radial slide mechanism) so that it can obtain said readings at first and second radially-offset locations. In one embodiment of the invention, first and second radially-offset readings are obtained at a first relative rotational orientation of the disc scale member and scale reading apparatus around the axis of rotation, wherein the scale reading apparatus' sensor is moved between the first and second radial locations between obtaining the first and second radially-offset readings and wherein the disc scale member and scale reading apparatus are not driven about the axis of rotation between obtaining the first and second radially-offset readings. This can be repeated at further different relative rotational orientations of the disc scale member and scale reading apparatus around the axis of rotation. In another embodiment, the apparatus could be operated to first obtain, for a plurality of different relative orientations of the scale member and the scale reading apparatus about the axis of rotation, scale readings with the sensor positioned at a first radial location ( "first radially-offset reading(s)"), and subsequently the sensor can be moved to a second radial location and then the apparatus could be operated to obtain, for a plurality of different relative orientations of the scale member and the scale reading apparatus about the axis of rotation with the sensor positioned at that second radial location.

**Claims**

1. A rotary encoder apparatus comprising:

   i) a scale member on which is provided at least one curved scale track that is centred on and extends at least partially annularly around a scale-track axis, the at least one curved scale track comprising substantially radially-extending scale features; and
   ii) a scale reading apparatus configured to obtain readings of the substantially radially-extending scale features, at first and second radially-offset locations;

   in which in use the scale reading apparatus and the scale member are configured to rotate relative to each other about an axis of rotation which is substantially parallel to the scale-track axis, and wherein the rotary encoder apparatus is configured to use the readings of the scale's radially-extending scale features obtained at both the first and second radially-offset locations to determine, at least one of:

   a) information about the arrangement of the scale reading apparatus and/or the scale member other than, or in addition to, information about their relative rotational arrangement about the axis of rotation; and
   b) a compensated measurement of the relative position of the scale reading apparatus and the disc scale member about the axis of rotation, wherein said compensated measurement is compensated for position errors about said axis of rotation caused by a change in the relative arrangement of said scale reading apparatus and the scale member other than, or in addition to, a change in their relative rotational arrangement about the axis of rotation.

2. A rotary encoder apparatus as claimed in claim 1, configured such that the readings obtained at the first and second radially-offset locations are obtained at substantially the same angular position about the scale-track axis.

3. A rotary encoder apparatus as claimed in claim 1 or 2, configured to obtain, at first and second radially-offset locations, readings of the scale's substantially radially-extending scale features within a sufficiently small time frame such that the change in angular position of the scale reading apparatus and the scale member between obtaining said readings is not more than 5°.

4. A rotary encoder apparatus as claimed in any preceding claim, wherein said change in the relative arrangement of said scale reading apparatus and the scale member occurs during relative rotation of the scale member and the scale reading apparatus due to an offset between the axis of rotation and the scale track axis.

5. A rotary encoder apparatus as claimed in any preceding claim, wherein said information determined in a) comprises information about the offset between the scale track axis and the axis of rotation.

6. A rotary encoder apparatus as claimed in any preceding claim, in which the readings obtained at the first and second radially-offset locations are readings of radially-extending scale features of one and the same scale track.

7. A rotary encoder apparatus as claimed in any preceding claim, wherein the readings of the scale's radially-extending scale features at said first and second radially-offset locations are obtained by at least one sensor within one and the same readhead.

8. A rotary encoder apparatus as claimed in any preceding claim, comprising a first sensor for obtaining the readings at the first radial location and a second sensor for obtaining the readings at the second radial location.

9. A rotary encoder apparatus as claimed in any of claims 1 to 7, comprising a single sensor for obtaining the readings at the first radial location and at the second radial location.

10. A rotary encoder apparatus as claimed in claim 9, in which the single sensor comprises a one-dimensional array of columnar pixels, configured such that the one-dimensional array of columnar pixels is divided into a plurality of rows wherein each columnar pixel has at least one individual sensing section in each row arranged to contribute to the columnar pixel's output, wherein each row is individually activatable so that which one or more of the individual sensing sections in the columnar pixels contribute to each columnar pixel's output can be selectively chosen and changed on a row-by-row basis.

11. A rotary encoder apparatus as claimed in claim 10, configured such that the reading obtained at the first radial location is obtained by, for each of a plurality of the columnar pixels, reading the output generated by the individual sensing sections in a first proper subset of the rows, and wherein the reading obtained at the second radial location is obtained by, for each of a plurality of the columnar pixels, reading the output generated by the individual sensing sections in a second proper subset of the rows, different to the first proper subset.

12. A rotary encoder apparatus as claimed in any of claims 10 to 11, wherein each columnar pixel has a shared signal storage region, for storing signal from multiple individual sensing sections in the columnar pixel.

13. A rotary encoder apparatus as claimed in any of claims 10 to 12, wherein the single sensor is divided into at least four rows, optionally at least six rows, for example at least eight rows.

14. A rotary encoder apparatus as claimed in any of claims 10 to 13, wherein the single sensor comprises at least 256 columnar pixels.

15. A rotary encoder apparatus as claimed in any of claims 10 to 14, wherein an individual sensing section comprises a photodetector.

16. A method of operating a rotary encoder apparatus that comprises a scale reading apparatus and a scale member on which is provided at least one curved scale track that is centred on and extends at least partially annularly around a scale-track axis, the at least one scale track comprising substantially radially-extending scale features, the scale member and the scale reading apparatus being configured to rotate relative to each other about an axis of rotation which is substantially parallel to the scale-track axis, the method comprising using readings of the scale's substantially radially-extending scale features obtained by the scale reading apparatus at first and second radially-offset locations, to determine:

a) information about the relative arrangement of said scale reading apparatus and the scale member other than or in addition to information about their relative rotational position about the axis of rotation; and/or

b) a compensated measurement of the relative position of the scale reading apparatus and the scale member about the axis of rotation, wherein said compensated measurement is compensated for position errors about said axis of rotation caused by a change in the relative arrangement of the scale reading apparatus and scale member other than or in addition to a change in their relative rotational arrangement about the axis of rotation.

Figure 1a
(PRIOR ART)

Figure 1b

Figure 2a

Figure 3a

Figure 3b

Figure 4

Figure 5

Figure 6

Europäisches
Patentamt

European
Patent Office

Office européen
des brevets

# EUROPEAN SEARCH REPORT

Application Number

EP 23 27 5019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 669 636 A1 (SIEMENS AG [DE]) 4 December 2013 (2013-12-04) | 1,2,4,5, 7,9,16 | INV. G01D5/244 |
| Y | * paragraphs [0007] – [0043] * | 3,6,8, 10-15 | |
| Y | US 2016/223362 A1 (WERNER OLAF [DE] ET AL) 4 August 2016 (2016-08-04) * paragraphs [0020], [0021], [0057], [0063] – [0107] * | 3 | |
| Y | EP 3 764 064 A1 (HEIDENHAIN GMBH DR JOHANNES [DE]) 13 January 2021 (2021-01-13) * paragraphs [0003] – [0083] * | 6,8 | |
| Y | US 2003/090681 A1 (JONES BENJAMIN K [US] ET AL) 15 May 2003 (2003-05-15) * paragraph [0083]; figures 2-4 * | 10-15 | |

TECHNICAL FIELDS
SEARCHED      (IPC)

G01D

The present search report has been drawn up for all claims

| Place of search | Date of completion of the search | Examiner |
|---|---|---|
| Munich | 23 June 2023 | Kurze, Volker |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**EP 4 414 664 A1**

## ANNEX TO THE EUROPEAN SEARCH REPORT
## ON EUROPEAN PATENT APPLICATION NO.

EP 23 27 5019

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2023

| Patent document cited in search report | | Publication date | Patent family member(s) | | Publication date |
|---|---|---|---|---|---|
| EP 2669636 | A1 | 04-12-2013 | NONE | | |
| US 2016223362 | A1 | 04-08-2016 | CN | 105814405 A | 27-07-2016 |
| | | | DE | 112014005669 A5 | 15-09-2016 |
| | | | EP | 3080555 A1 | 19-10-2016 |
| | | | US | 2016223362 A1 | 04-08-2016 |
| | | | WO | 2015086014 A1 | 18-06-2015 |
| EP 3764064 | A1 | 13-01-2021 | CN | 112212809 A | 12-01-2021 |
| | | | DE | 102019210274 A1 | 14-01-2021 |
| | | | EP | 3764064 A1 | 13-01-2021 |
| | | | JP | 2021015114 A | 12-02-2021 |
| | | | US | 2021010807 A1 | 14-01-2021 |
| US 2003090681 | A1 | 15-05-2003 | CN | 1419217 A | 21-05-2003 |
| | | | DE | 10252321 A1 | 22-05-2003 |
| | | | GB | 2384050 A | 16-07-2003 |
| | | | JP | 2003178297 A | 27-06-2003 |
| | | | US | 2003090681 A1 | 15-05-2003 |

EPO FORM P0459

For more details about this annex : see Official Journal of the European Patent Office, No. 12/82

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0207121 A
- US 4974962 A
- US 7499827 B
- US 7659992 B
- US 5861953 A
- US 10132657 B
- US 20120072169 A
- WO 2022171995 A

- US 8017904 B
- US 9140580 B
- DE 102008043556
- WO 2021116660 A
- WO 2022074368 A
- WO 2022074371 A
- WO 2022171994 A